(19) **Europäisches Patentamt / European Patent Office / Office européen des brevets**

(11) **EP 4 574 245 A1**

(12) **EUROPÄISCHE PATENTANMELDUNG**

(43) Veröffentlichungstag:
**25.06.2025 Patentblatt 2025/26**

(51) Internationale Patentklassifikation (IPC):
**B01D 61/08** (2006.01) **B01D 61/12** (2006.01)

(21) Anmeldenummer: **24220906.2**

(22) Anmeldetag: **18.12.2024**

(52) Gemeinsame Patentklassifikation (CPC):
**B01D 61/08; B01D 61/12; C02F 1/008; C02F 1/441;** B01D 2311/243; C02F 2209/02; C02F 2209/05

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: **20.12.2023 DE 102023135989**

(71) Anmelder: **B. Braun Avitum AG**
**34212 Melsungen (DE)**

(72) Erfinder:
• **Lieb, Nino**
**34212 Melsungen (DE)**
• **Odernheimer, Philipp**
**34212 Melsungen (DE)**

(74) Vertreter: **Patentanwälte**
**Ruff, Wilhelm, Beier, Dauster & Partner mbB**
**Kronenstraße 30**
**70174 Stuttgart (DE)**

(54) **UMKEHROSMOSEANLAGE**

(57) Umkehrosmoseanlage (100), aufweisend:
- einen ersten Leitfähigkeitssensor (1) zum Messen einer elektrischen Leitfähigkeit (L1) von Wasser (2), das der Umkehrosmoseanlage (100) zugeführt wird,
- einen zweiten Leitfähigkeitssensor (3) zum Messen einer elektrischen Leitfähigkeit (L2) eines mittels der Umkehrosmoseanlage (100) erzeugten Permeats (4; 23), und
- eine Ki-Einheit (5), die dazu ausgebildet ist, einen zu rezirkulierenden Anteil (RA) eines mittels der Umkehrosmoseanlage (100) erzeugten Konzentrats (6; 20) in Abhängigkeit von der gemessenen elektrischen Leitfähigkeit (L1) des Wasser (2), das der Umkehrosmoseanlage (100) zugeführt wird, und in Abhängigkeit von der gemessenen elektrischen Leitfähigkeit (L2) des mittels der Umkehrosmoseanlage (100) erzeugten Permeats (4; 23) basierend auf einem statistischen Modell zu berechnen und entsprechend einzustellen, wobei das statistische Modell mittels Trainingsdaten trainiert worden ist.

Fig. 1

EP 4 574 245 A1

**Beschreibung**

Die DE 42 39 867 A1 offenbart ein Verfahren zur Aufbereitung von Flüssigkeiten nach dem Prinzip der umgekehrten Osmose mittels einer ein Membranmodul aufweisenden Vorrichtung unter Rezirkulation eines Teils des Konzentrats, wobei eine Salzkonzentration des aus dem Membranmodul austretenden Permeats fortlaufend gemessen und der rezirkulierte Anteil des Konzentrats zur Ausbeutesteigerung so hoch eingestellt wird, dass ein vorgegebener zulässiger Grenzwert der Salzkonzentration im Permeat erreicht aber nicht überschritten wird.

Der Erfindung liegt die Aufgabe zugrunde, eine Umkehrosmoseanlage zur Verfügung zu stellen, die automatisch eine bezogen auf einen Leitfähigkeitssollwert des Permeats optimale Ausbeute einstellt.

Die Umkehrosmoseanlage weist auf: einen ersten Leitfähigkeitssensor zum Messen einer elektrischen Leitfähigkeit von Wasser, das der Umkehrosmoseanlage bzw. einem Filter mit einer Membran der Umkehrosmoseanlage zugeführt wird, einen zweiten Leitfähigkeitssensor zum Messen einer elektrischen Leitfähigkeit eines mittels der Umkehrosmoseanlage erzeugten Permeats, und eine Künstliche Intelligenz (KI)-Einheit. Die KI-Einheit ist dazu ausgebildet, einen zu rezirkulierenden Anteil eines mittels der Umkehrosmoseanlage erzeugten Konzentrats bzw. eine Ausbeute in Abhängigkeit von der gemessenen elektrischen Leitfähigkeit des Wasser, das der Umkehrosmoseanlage zugeführt wird, und in Abhängigkeit von der gemessenen elektrischen Leitfähigkeit des mittels der Umkehrosmoseanlage erzeugten Permeats basierend auf einem statistischen Modell zu berechnen und entsprechend einzustellen, wobei das statistische Modell mittels Trainingsdaten trainiert worden ist.

Die Trainingsdaten können beispielsweise eine Vielzahl von Trainingsdatensätzen aufweisen, wobei ein jeweiliger Trainingsdatensatz zumindest eine elektrische Leitfähigkeit des Wasser, das der Umkehrosmoseanlage zugeführt wird, eine elektrische Leitfähigkeit des mittels der Umkehrosmoseanlage erzeugten Permeats und eine zugehörige optimale Ausbeute enthält. Die Trainingsdatensätze unterscheiden sich in der elektrischen Leitfähigkeit des Wasser, das der Umkehrosmoseanlage zugeführt wird, und/oder in der elektrischen Leitfähigkeit des mittels der Umkehrosmoseanlage erzeugten Permeats. Die Trainingsdaten können empirisch und/oder mittels eines Modells ermittelt/erzeugt werden.

Die KI-Einheit kann weiter dazu ausgebildet sein, den zu rezirkulierenden Anteil des mittels der Umkehrosmoseanlage erzeugten Konzentrats bzw. die Ausbeute in Abhängigkeit von der gemessenen elektrischen Leitfähigkeit des Wasser, das der Umkehrosmoseanlage zugeführt wird, in Abhängigkeit von der gemessenen elektrischen Leitfähigkeit des mittels der Umkehrosmoseanlage erzeugten Permeats und weiter in Abhängigkeit von einem Leitfähigkeitssollwert des mittels der Umkehrosmoseanlage erzeugten Permeats basierend auf dem statistischen Modell zu berechnen und entsprechend einzustellen.

In einer Ausführungsform weist die Umkehrosmoseanlage weiter auf: einen Temperatursensor zum Messen einer Temperatur, insbesondere einer Temperatur des Permeats. Die KI-Einheit ist weiter dazu ausgebildet, den zu rezirkulierenden Anteil des mittels der Umkehrosmoseanlage erzeugten Konzentrats in Abhängigkeit von der gemessenen elektrischen Leitfähigkeit des Wasser, das der Umkehrosmoseanlage zugeführt wird, in Abhängigkeit von der gemessenen elektrischen Leitfähigkeit des mittels der Umkehrosmoseanlage erzeugten Permeats und in Abhängigkeit von der gemessenen Temperatur basierend auf dem statistischen Modell zu berechnen und entsprechend einzustellen.

In einer Ausführungsform ist die KI-Einheit weiter dazu ausgebildet, den zu rezirkulierenden Anteil des mittels der Umkehrosmoseanlage erzeugten Konzentrats in Abhängigkeit von Umkehrosmoseanlagen-Parametern der Umkehrosmoseanlage basierend auf dem statistischen Modell zu berechnen und entsprechend einzustellen.

In einer Ausführungsform sind die Umkehrosmoseanlagen-Parametern ausgewählt aus der Menge von Umkehrosmoseanlagen-Parametern, d.h. enthalten mindestens einen Umkehrosmoseanlagen-Parametern aus der folgenden Menge: Überströmungsfaktor(en), Öffnungsintervalle und/oder einen Öffnungsgrade von Verwurfs-Ventilen, d.h. Ventilen, die einen Volumenstrom des Abwassers steuern, Pumpendrehzahlen von Pumpen der Umkehrosmoseanlage, insbesondere solcher Pumpen, die den Volumenstrom des Wassers durch die Umkehrosmoseanlage beeinflussen, Leistungsaufnahmen der Pumpen der Umkehrosmoseanlage, einen Volumenstrom des Permeats, einen Druck des Wassers, das einem Filter enthaltend eine Membran zugeführt wird, einen Rückhalt einer Membran, und eine elektrische Leitfähigkeit des Wasser in Strömungsrichtung vor der Membran.

In einer Ausführungsform ist die KI-Einheit dazu ausgebildet, die gemessene elektrischen Leitfähigkeit des mittels der Umkehrosmoseanlage erzeugten Permeats mit einem Leitfähigkeitssollwert zu vergleichen und das statistische Modell derart nachzuführen, dass eine Differenz zwischen der gemessenen elektrischen Leitfähigkeit des mittels der Umkehrosmoseanlage erzeugten Permeats und dem Leitfähigkeitssollwert möglichst gering wird.

Die Erfindung ermöglicht eine Ermittlung bzw. eine Empfehlung einer optimalen Wasserausbeute bei Umkehrosmoseanlagen mittels Machine Learning. Die Wasserausbeute gibt hierbei an, wie viel Abwasser pro Produkt/Permeat verursacht wird. Eine typische optimale Wasserausbeute kann beispielsweise zwischen 50 % und 95 % liegen.

Für den in der vorliegenden Anmeldung verwendeten Begriff "Ausbeute" sind weitere Begriffe gebräuchlich, wie beispielsweise WCF (Water Conversion Factor), Yield, Recovery, Systemausbeute, usw.

Beim Betrieb von Umkehrosmoseanlagen ist typisch eine Ausbeute vorzugeben. Die Ausbeute beschreibt hierbei das Verhältnis von Permeat (Produkt) zu verbrauchtem Wasser oder auch Abwasser. Die Ausbeute kann formelmäßig beispielsweise wie folgt angegeben werden:

$$Ausbeute\ [\%] = \frac{VP}{VF} * 100$$

wobei VP ein Volumenstrom des Permeats ist und VF ein Volumenstrom des sogenannten Feed Wassers ist. Mit Feed Wasser wird das Wasser bezeichnet, das einer (Filter-) Membran zugeführt wird. Der Volumenstrom des Feed Wassers entspricht hierbei einer Summe des Volumenstrom des Permeats und des Volumenstroms des Abwassers.

Die Ausbeute muss kleiner als 100% sein, da der Umkehrosmose-Prozess Ionen aus dem Feed Wasser zurückhält, die sich ohne teilweises Ausleiten des mit Ionen angereicherten Abwassers an der Membran festsetzen würden, was als Scaling bezeichnet wird. Scaling verursacht über der Zeit eine Abnahme der Umkehrosmoseanlagen-Leistung bzw. eine reduzierte Permeat-Qualität.

Anlagenhersteller geben einen typischen Einstellbereich für die Ausbeute an. Die konkrete Einstellung der Ausbeute ist jedoch dem Betreiber der Umkehrosmoseanlage überlassen. Dies liegt vor allem daran, dass das zugeführte Wasser bzw. Feed Wasser (Weichwasser) unterschiedliche Leitfähigkeiten, also Ionenkonzentrationen, aufweisen kann. Somit muss an Orten, an denen eine hohe Ionenkonzentration vorliegt, mehr Abwasser abgeführt werden als an Orten, an denen eine geringere Ionenkonzentration vorherrscht.

Da Umkehrosmoseanlagen verschiedenen Einflüssen wie beispielsweise Temperatur, Ionenkonzentration, Permeat-Produktion, hydraulischer Aufbau, kundenspezifische Parametereinstellungen, usw. ausgesetzt sind, ist es schwierig, eine allgemeingültige Aussage in Bezug die einzustellende Ausbeute zu treffen. Die Erfindung löst dieses Problem mittels automatischer KI-basierter Einstellung der Ausbeute in Abhängigkeit der relevanten Betriebsparameter der Umkehrosmoseanlage. Die elektrische Leitfähigkeit des zugeführten Wassers bzw. Weichwassers kann beispielsweise zwischen 100-2000 μS/cm liegen und die typische Leitfähigkeit des Permeats kann beispielsweise zwischen 1-30 μS/cm liegen.

Die Erfindung wird nachfolgend unter Bezugnahme auf die Zeichnungen detailliert beschrieben. Hierbei zeigt;

Fig. 1   hoch schematisch eine Umkehrosmoseanlage gemäß einer ersten Ausführungsform,

Fig. 2   hoch schematisch eine Umkehrosmoseanlage gemäß einer zweiten Ausführungsform und

Fig. 3   hoch schematisch eine Umkehrosmoseanlage gemäß einer dritten Ausführungsform und

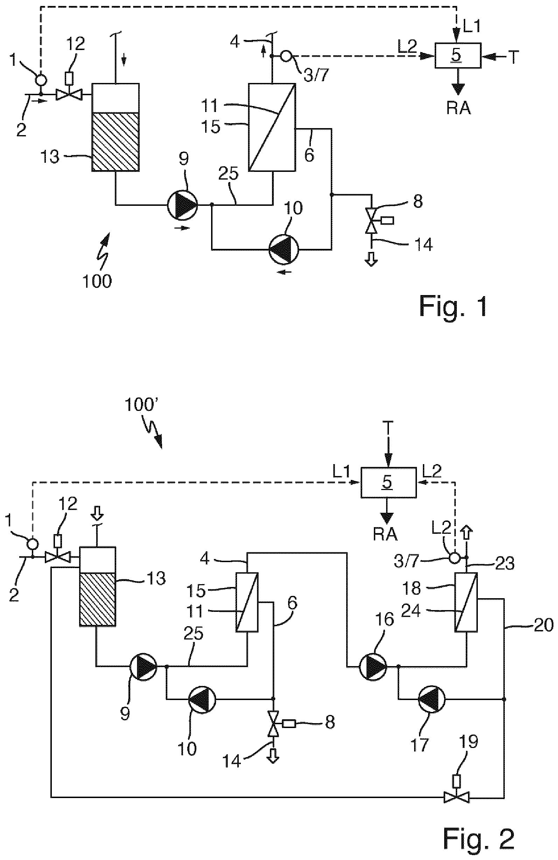

Fig. 1 zeigt eine Umkehrosmoseanlage 100 gemäß einer ersten Ausführungsform. Weichwasser 2 gelangt über ein Magnetventil 12 in einen Vorlagetank 13. Dabei wird das Weichwasser 2 kontinuierlich mittels eines ersten Leitfähigkeitssensors 1 ionenunspezifisch hinsichtlich seiner elektrischen Leitfähigkeit L1 vermessen. Eine oberhalb des Vorlagetanks 13 dargestellte Leitung liefert nicht verbrauchtes Permeat zurück in den Vorlagetank 13.

Das Tankwasser wird über eine Pumpe 9 zusammen mit einem Anteil des Konzentrats 6 als Feed Wasser 25 in ein Filter 15 mit wenigstens einer (Filter-) Membran 11 eingebracht. Das erzeugte Permeat 4 wird mittels eines zweiten Leitfähigkeitssensors 3 hinsichtlich seiner elektrischen Leitfähigkeit L2 vermessen.

Das Filter 15 weist in der gezeigten Ausführungsform eine (Filter-) Membran 11 auf. Es versteht sich, dass das Filter 15 mehr als eine (Filter-) Membran 11 aufweisen kann. Weiter können mehrere Filter 15 in Reihe oder parallelgeschaltet sein.

Das aus dem Filterprozess entstehende Konzentrat 6 wird entweder über eine Pumpe 10 rezirkuliert und somit zum Bestandteil des Feed Wassers 25 oder als Abwasser 14 über ein Magnetventil bzw. Verwurfs-Ventil 8 aus der Umkehrosmoseanlage 100 herausgleitet. Die Menge des Abwasser 14 ist abhängig von einer eingestellten Ausbeute. Die Ausbeute kann hierbei als Verhältnis zwischen dem Volumenstrom des Permeats 4 (Zähler) und dem Volumenstrom des Feed Wassers 25 (Nenner) definiert sein.

Hinsichtlich der oben beschriebenen Merkmale sei auch auf die einschlägige Fachliteratur verwiesen.

Die Ausbeute bzw. ein zu rezirkulierenden Anteil RA des mittels der Umkehrosmoseanlage 100 erzeugten Konzentrats 6 wird erfindungsgemäß mittels maschinellen Lernens basierend auf den mittels der Leitfähigkeitssensoren 1 und 3 gemessenen Leitfähigkeiten bzw. Ionenkonzentrationen L1 bzw. L2 mittels einer KI-Einheit 5 basierend auf einem statistischen Modell automatisch eingestellt bzw. klassifiziert.

Die Ausbeute bzw. der zu rezirkulierende Anteil RA wird hierbei von der KI-Einheit 5 automatisch durch geeignete Ansteuerung der Pumpe 10 und des Verwurfs-Ventil 8 derart eingestellt, dass die elektrische Leitfähigkeit L2 des Permeats 4 auf einem einstellbaren Niveau bleibt, beispielsweise zwischen 1-30 μS/cm. Die Erfolgskontrolle der korrekten Einstellung erfolgt über den Leitfähigkeitssensor 3 im Permeat 4.

Wenn die Klassifizierung der Ausbeute bzw. des zu rezirkulierenden Anteils RA nicht zur gewünschten elektrischen Leitfähigkeit L2 des Permeats 4 führt, verändert die KI-Einheit 5 die Ausbeute bzw. den zu rezirkulierenden Anteils RA sukzessive, bis die gewünschte elektrische Leitfähigkeit L2 erreicht wird. Der Klassifizierungsalgorithmus wird dann mit den neu entstandenen Datenpunkten versorgt, um das statistische Model entsprechend nachzuführen.

Neben den beiden elektrischen Leitfähigkeiten L1 und L2 können weitere Größen durch die KI-Einheit 5 zur automatischen Einstellung der Ausbeute bzw. des zu rezirkulierenden Anteils RA ausgewertet werden. Ein Beispiel hierfür ist die Temperatur T des Permeats 4, die beispielsweise mittels eines Temperatursensor 7 gemessen wird. Die Temperatur T hat einen unmittelbare Einfluss auf die Leitfähigkeit L2 des Permeats 4 und hat dadurch ebenfalls Auswirkungen auf die Ausbeute bzw. den zu rezirkulierenden Anteil RA. Es ist bekannt, dass eine steigende Temperatur T zu einem geringeren Ionenrückhalt führt, was wiederum in einer höheren elektrischen Leitfähigkeit L2 des Permeats 4 resultiert.

Weiter können Anlagenparameter das System und die Klassifizierung beeinflussen. Beispiele hierfür sind, Überströmungsfaktor(en), Öffnungsintervalle des Verwurfs-Ventils 8 oder weitere Messungen wie Drehzahl der Pumpen 9 und 10, Leistungsaufnahme der Pumpen 9 und 10, Leistungsaufnahme des Gesamtsystems, usw.

Das akzeptable konstante Niveau der elektrischen Leitfähigkeit L2 des Permeats 4, d.h. ein Leitfähigkeitssollwert, ist von einem Nutzer einstellbar. Der Leitfähigkeitssollwert führt zu einer Anpassung der Klassifizierungen bzw. des statistischen Modells. Ein höherer Leitfähigkeitssollwert verschiebt die Ausbeute zu höheren Werten.

Neben dem Magnetventil 8 können auch andere Arten von Ventilen verwendet werden, wie beispielsweise Motorstellventile usw., die einen kontinuierlichen, einstellbaren Abwasserstrom erzeugen.

Fig. 2 zeigt hoch schematisch eine Umkehrosmoseanlage 100' gemäß einer zweiten Ausführungsform, die zweistufig aufgebaut ist. Die erste Stufe entspricht hierbei im Wesentlichen der in Fig. 1 gezeigten Umkehrosmoseanlage 100. Der ersten Stufe nachgeschaltet ist eine zweite Stufe, die das Permeat 4 der ersten Stufe weiterverarbeitet und ein weiteres Permeat 23 ausgibt. Die zweite Stufe weist auf: Pumpen 16 und 17 und ein Filter 18 mit einer eine (Filter-) Membran 24. Abwasser 20 des zweiten Filters 18 wird über ein Ventil 19 in den Vorlagetank 13 zurückgeleitet und/oder über die Pumpe 17 dem zweiten Filter 18 zugeführt.

Die Ausbeute bzw. der zu rezirkulierende Anteil RA der ersten Stufe und ein zu rezirkulierender Anteil der zweiten Stufe werden hierbei von der KI-Einheit 5, gegebenenfalls in Interaktion mit einer herkömmlichen, die Pumpe(n) und die Ventile ansteuernden Steuereinheit, automatisch durch geeignete Ansteuerung der Pumpe 10 und des Verwurfs-Ventil 8 bzw. durch geeignete Ansteuerung der Pumpe 17 und des Ventils 19 derart eingestellt, dass die elektrische Leitfähigkeit L2 des Permeats 23 auf einem einstellbaren Niveau bleibt.

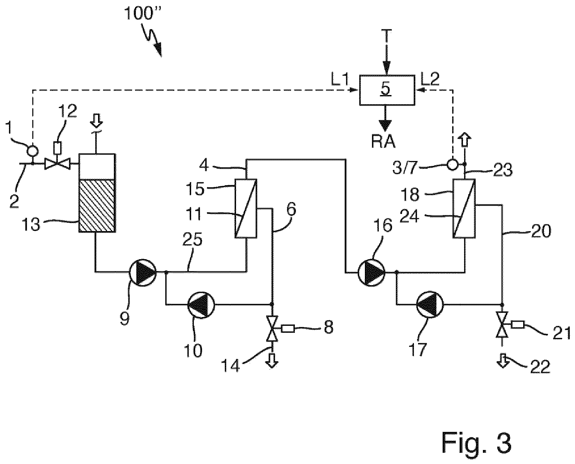

Fig. 3 zeigt hoch schematisch eine Umkehrosmoseanlage 100'' gemäß einer dritten Ausführungsform, die zweistufig aufgebaut ist. Die erste Stufe entspricht hierbei im Wesentlichen der in Fig. 1 gezeigten Umkehrosmoseanlage 100. Der ersten Stufe nachgeschaltet ist eine zweite Stufe, die das Permeat 4 der ersten Stufe weiterverarbeitet und ein weiteres Permeat 23 ausgibt. Die zweite Stufe weist auf: Pumpen 16 und 17 und ein Filter 18 mit einer eine (Filter-) Membran 24. Abwasser 22 des zweiten Filters 18 wird über ein Verwurfs-Ventil 21 abgeführt.

Die Ausbeute bzw. die zu rezirkulierenden Anteile der beiden Stufen werden hierbei von der KI-Einheit 5 automatisch durch geeignete Ansteuerung der Pumpen 10 und 17 und der Verwurfs-Ventile 8 und 21 derart eingestellt, dass die elektrische Leitfähigkeit L2 des Permeats 23 auf einem einstellbaren Niveau bleibt.

**Patentansprüche**

1.  Umkehrosmoseanlage (100), aufweisend:

    - einen ersten Leitfähigkeitssensor (1) zum Messen einer elektrischen Leitfähigkeit (L1) von Wasser (2), das der Umkehrosmoseanlage (100) zugeführt wird,
    - einen zweiten Leitfähigkeitssensor (3) zum Messen einer elektrischen Leitfähigkeit (L2) eines mittels der Umkehrosmoseanlage (100) erzeugten Permeats (4; 23), und
    - eine KI-Einheit (5), die dazu ausgebildet ist, einen zu rezirkulierenden Anteil (RA) eines mittels der Umkehrosmoseanlage (100) erzeugten Konzentrats (6; 20) in Abhängigkeit von der gemessenen elektrischen Leitfähigkeit (L1) des Wasser (2), das der Umkehrosmoseanlage (100) zugeführt wird, und in Abhängigkeit von der gemessenen elektrischen Leitfähigkeit (L2) des mittels der Umkehrosmoseanlage (100) erzeugten Permeats (4; 23) basierend auf einem statistischen Modell zu berechnen und entsprechend einzustellen, wobei das statistische Modell mittels Trainingsdaten trainiert worden ist.

2.  Umkehrosmoseanlage (100) nach Anspruch 1, **dadurch gekennzeichnet, dass** die Umkehrosmoseanlage (100) weiter aufweist:

    - einen Temperatursensor (7) zum Messen einer Temperatur (T), insbesondere einer Temperatur des Permeats (4; 23),
    - wobei die KI-Einheit (5) weiter dazu ausgebildet ist, den zu rezirkulierenden Anteil (RA) des mittels der Umkehrosmoseanlage (100) erzeugten Konzentrats (6; 20) in Abhängigkeit von der gemessenen elektrischen Leitfähigkeit (L1) des Wasser (1), das der Umkehrosmoseanlage (100) zugeführt wird, in Abhängigkeit von der gemessenen elektrischen Leitfähigkeit (L2) des mittels der Umkehrosmoseanlage (100) erzeugten Permeats (4; 23) und in Abhängigkeit von der gemessenen Temperatur (T) basierend auf dem statistischen Modell zu berechnen und entsprechend einzustellen.

3. Umkehrosmoseanlage (100) nach einem der vorhergehenden Ansprüche, **dadurch gekennzeichnet, dass**

- die KI-Einheit (5) weiter dazu ausgebildet ist, den zu rezirkulierenden Anteil (RA) des mittels der Umkehrosmoseanlage (100) erzeugten Konzentrats (6; 20) in Abhängigkeit von Umkehrosmoseanlagen-Parametern der Umkehrosmoseanlage (100) basierend auf dem statistischen Modell zu berechnen und entsprechend einzustellen.

4. Umkehrosmoseanlage (100) nach Anspruch 3, **dadurch gekennzeichnet, dass**

- die Umkehrosmoseanlagen-Parametern ausgewählt sind aus der Menge von Umkehrosmoseanlagen-Parametern:
- Überströmungsfaktor(en),
- Öffnungsintervalle und/oder Öffnungsgrade von Verwurfs-Ventilen (8; 21),
- Pumpendrehzahlen von Pumpen (9, 10) der Umkehrosmoseanlage (100),
- Leistungsaufnahmen der Pumpen (9, 10) der Umkehrosmoseanlage (100),
- einen Volumenstrom des Permeats (4; 23),
- einen Druck des Wassers (2), das einem Filter (15) mit einer Membran (11) zugeführt wird,
- einen Rückhalt einer Membran (11), und
- eine elektrische Leitfähigkeit des Wasser in Strömungsrichtung vor der Membran (11).

5. Umkehrosmoseanlage (100) nach einem der vorhergehenden Ansprüche, **dadurch gekennzeichnet, dass**

- die KI-Einheit (5) dazu ausgebildet ist, die gemessene elektrischen Leitfähigkeit (L2) des mittels der Umkehrosmoseanlage (100) erzeugten Permeats (4; 23) mit einem Leitfähigkeitssollwert zu vergleichen und das statistische Modell derart nachzuführen, dass eine Differenz zwischen der gemessenen elektrischen Leitfähigkeit (L2) des mittels der Umkehrosmoseanlage (100) erzeugten Permeats (4; 23) und dem Leitfähigkeitssollwert möglichst gering wird.

Fig. 1

Fig. 2

Fig. 3

Europäisches
Patentamt

European
Patent Office

Office européen
des brevets

# EUROPÄISCHER RECHERCHENBERICHT

Nummer der Anmeldung

EP 24 22 0906

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2021/243458 A1 (SYNAUTA INC [CA]) 9. Dezember 2021 (2021-12-09) | 1-5 | INV. B01D61/08 |
| Y | * Absatz [0083]; Abbildung 1a * * Absatz [0140] - Absatz [0146] * | 1-5 | B01D61/12 |
| | - - - - - | | |
| Y,D | DE 42 39 867 A1 (WAT WASSER UND UMWELTTECHNIK G [DE]) 1. Juni 1994 (1994-06-01) * Abbildung 1 * | 1-5 | |
| | - - - - - | | |

RECHERCHIERTE
SACHGEBIETE (IPC)

B01D
C02F

Der vorliegende Recherchenbericht wurde für alle Patentansprüche erstellt

| Recherchenort | Abschlußdatum der Recherche | Prüfer |
|---|---|---|
| München | 30. April 2025 | Kukolka, Florian |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**    EP 24 22 0906

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-04-2025

| Im Recherchenbericht angeführtes Patentdokument | Datum der Veröffentlichung | Mitglied(er) der Patentfamilie | Datum der Veröffentlichung |
|---|---|---|---|
| WO 2021243458 A1 | 09-12-2021 | AU 2021284984 A1 | 22-12-2022 |
|  |  | EP 4157495 A1 | 05-04-2023 |
|  |  | US 2023072711 A1 | 09-03-2023 |
|  |  | US 2025114747 A1 | 10-04-2025 |
|  |  | WO 2021243458 A1 | 09-12-2021 |
| DE 4239867 A1 | 01-06-1994 | DE 4239867 A1 | 01-06-1994 |
|  |  | DE 4244978 B4 | 26-04-2007 |
|  |  | EP 0599281 A2 | 01-06-1994 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4239867 A1